# FASCICULE DE BREVET EUROPEEN

(11) **EP 1 893 510 B1**
(45) Date de publication et mention de la délivrance du brevet: **17.06.2009**
(21) Numéro de dépôt: 06726335.0
(22) Date de dépôt: 11.04.2006
(51) Int. Cl.: B65G 47/31, B65G 47/52, B65G 21/20

(54) **DISPOSITIF D'ENTRAINEMENT POUR CONVOYEURS OU TRANSPORTEURS DE CHARGES**
VORRICHTUNG ZUM ANTRIEB VON LASTFÖRDER- ODER -TRANSPORTEINRICHTUNGEN
DEVICE FOR DRIVING LOAD CONVEYORS OR TRANSPORTERS

(30) Priorité: 18.04.2005 FR 0503854; 22.06.2005 FR 0506345
(43) Date de publication de la demande: 05.03.2008
(73) Titulaire: Sidel Participations S.A.S., 76930 Octeville sur Mer (FR)
(72) Inventeur: PETROVIC, Zmaj, 76930 Octeville-sur-Mer (FR)
(74) Mandataire: Nuss, Pierre
(86) Numéro de dépôt international: PCT/FR2006/050329
(87) Numéro de publication internationale: WO 2006/111673

(56) Documents cités:
- DE-A1- 2 129 089
- DE-A1- 10 154 203
- DE-U1- 8 518 948
- GB-A- 1 471 769
- US-A- 3 194 382
- US-A- 3 722 657
- US-A- 4 934 510
- US-A- 5 699 651

## Description

La présente invention concerne le domaine du convoyage de charges au moyen de convoyeurs ou transporteurs à palettes, notamment avec changement de cadence de transport et/ou de niveau entre convoyeurs, et a pour objet un dispositif d'entraînement pour convoyeurs ou transporteurs de charges.

De nombreux domaines de l'industrie mettent couramment en oeuvre des convoyeurs ou transporteurs de charges pour transférer de telles charges entre des postes de travail ou vers des postes de stockage ou de conditionnement ou encore d'expédition. Les charges peuvent être sous forme de pièces, de conteneurs, ou de caisses compartimentées pour y mettre des bouteilles. Par ailleurs, la mise en oeuvre de ce type de convoyeur ou de transporteur peut être effectuée dans des centres de tri d'objets ou de récipients et plus particulièrement de bouteilles consignées.

Généralement, ces convoyeurs ou transporteurs de charges se présentent sous forme de tables allongées munies de rouleaux motorisés, disposés perpendiculairement à leur axe longitudinal et alignés parallèlement entre eux ou encore sous forme de chaînes à palettes ou à courroie à bande flexible ou à courroies crantées et les charges à transporter sont simplement posées de manière à peu près centrée sur ces convoyeurs, c'est-à-dire que les convoyeurs pour transfert rectiligne se présentent actuellement sous la forme de deux chaînettes symétriques. Ces convoyeurs ou transporteurs de charges répondent de manière satisfaisante aux exigences habituelles en matière de transport de charges entre des postes de travail.

Cependant, dans le cas où de tels convoyeurs ou transporteurs débouchent sur des postes d'accumulation, avant chargement ou autre, ou encore sont destinés à réaliser un changement de niveau, il se pose un problème d'entraînement des charges ou de retenue de ces charges sur les convoyeurs ou transporteurs.

En effet, dans le cas du poste d'accumulation, des dispositifs de retenue de charge sont utilisés. Ils se présentent sous forme de butées escamotables placées en travers du chemin emprunté par les charges, de façon à les arrêter. L'inconvénient de ce dispositif est le déplacement rapide intempestif de charges plus lourdes venant heurter violemment la butée. Ce type de chocs occasionne, à la longue, des dommages lourds de conséquence sur le dispositif de blocage.

Pour obvier à cet inconvénient, il est généralement proposé de mettre en oeuvre des convoyeurs ou transporteurs, dont les palettes des chaînes à palettes sont pourvues d'un revêtement à plus fort coefficient d'adhérence permettant un maintien amélioré des charges et donc leur freinage ou leur entraînement. Toutefois, le revêtement à plus fort coefficient d'adhérence est choisi en fonction du poids des charges, de sorte que ce type de ces convoyeurs ou transporteurs sont inopérants lorsque le poids des charges à déplacer ou à accumuler n'est pas constant. Un dispositif d'entraînement pour convoyeurs de charges est connu du document US 5 699 651.

En outre, ce type de convoyeurs ou transporteurs décrit dans le paragraphe précédent est aussi utilisé pour les changements de niveau, mais, l'inclinaison de la pente de ces convoyeurs ou transporteurs sera forcément limitée à une valeur relativement faible, due à la limite d'adhérence du revêtement.

La présente invention a pour but de pallier ces inconvénients en proposant un dispositif d'entraînement pour convoyeurs ou transporteurs de charges permettant de réaliser un entraînement maîtrisé et/ou une accumulation et/ou un transfert des charges entre niveaux différents de convoyeurs ou transporteurs.

A cet effet, le dispositif d'entraînement pour convoyeurs ou transporteurs de charges, conforme à l'invention, est caractérisé en ce qu'il est sous forme d'un moyen d'entraînement et de guidage, intégré dans une ligne de convoyeurs ou transporteurs et s'étendant suivant l'axe longitudinal desdits convoyeurs ou transporteurs, perpendiculairement à leur plan et essentiellement constitué par la combinaison d'un tapis d'entraînement, disposé le long d'au moins un bord longitudinal ou dans le prolongement des bords longitudinaux d'au moins un convoyeur ou transporteur ou de deux convoyeurs ou transporteurs successifs, et d'un guide d'application des charges contre le tapis d'entraînement, disposé le long du ou des bords longitudinaux opposés.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue en plan d'un ensemble de convoyeurs ou transporteurs mettant en oeuvre un dispositif conforme à l'invention ;
la figure 2 est une vue en perspective, à plus grande échelle, du dispositif suivant la figure 1 ;
la figure 3 est une vue en perspective d'une variante de réalisation de l'invention ;
la figure 4 est une vue schématique en élévation latérale d'une autre variante de réalisation du dispositif conforme à l'invention, et
la figure 5 est une vue en perspective d'un moyen complémentaire d'application des charges contre le tapis d'entraînement.

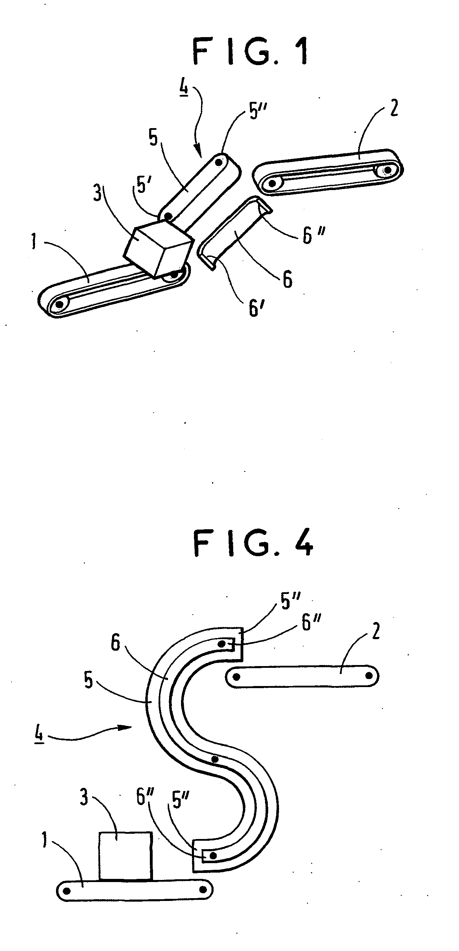

Les figures 1 à 4 des dessins annexés représentent, à titre d'exemples, un convoyeur ou transporteur de charges amont 1 et un convoyeur ou transporteur de charges aval 2 destinés à acheminer des charges 3. entre différents postes de travail.

Dans la suite de la description, le terme convoyeur amont est utilisé pour désigner le convoyeur, par lequel les charges arrivent, et le terme convoyeur aval pour désigner le convoyeur, par lequel les charges sortent, quand elles ont fini d'être traitées par le dispositif de transfert.

Sur les figures 1 à 4 des dessins annexés, la charge 3 est sous forme d'une caisse, par exemple de réception de bouteilles ou analogues, mais peut être constituée sous toutes autres formes, à savoir aussi bien sous forme de pièce simple, usinée ou non ou d'un ensemble de pièces assemblées. La charge 3, déplacée sur les convoyeurs ou transporteurs amont 1 et aval 2, est toujours disposée sur ces derniers de manière centrée, c'est-à-dire de manière à être parfaitement en équilibre lorsqu'elle se trouve seulement sur ces convoyeurs ou transporteurs amont 1 ou aval 2 et dépasse, sur une partie de sa longueur, de part et d'autre desdits convoyeurs amont 1 et aval 2.

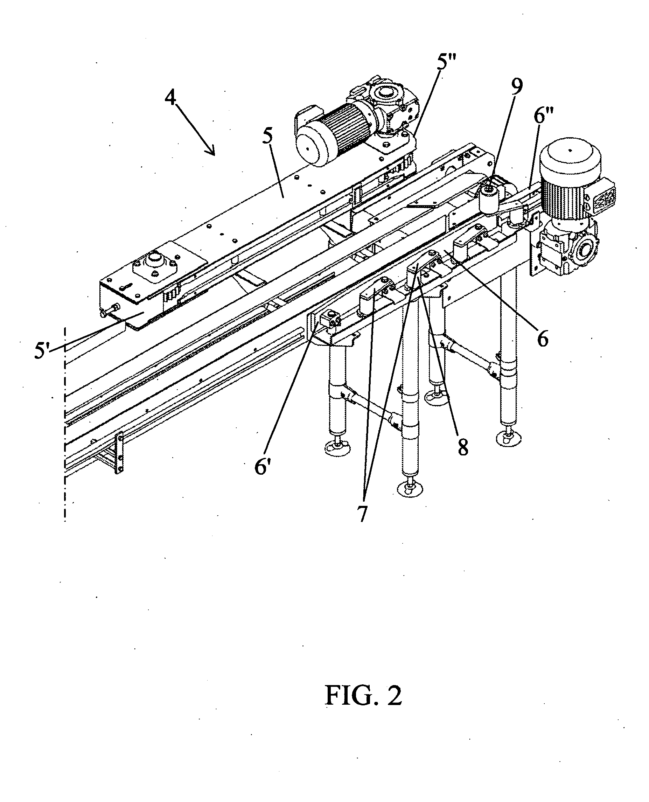

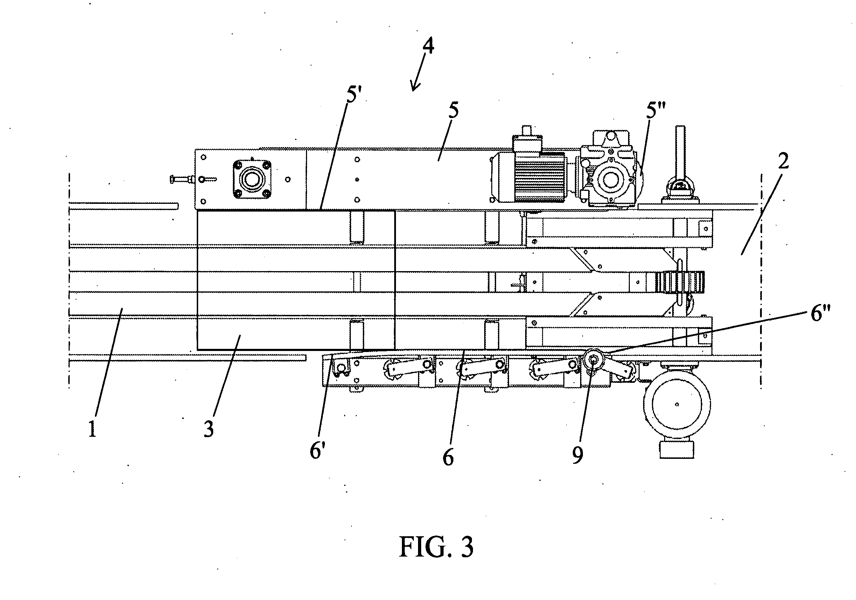

L'un des transporteurs ou convoyeurs de charges, en l'occurrence le convoyeur ou transporteur aval 2 des figures 1 et 2, peut aussi former lui-même un poste de travail, à savoir, par exemple, un poste de rassemblement ou de groupage de charges 3 avant leur conditionnement définitif ou leur transfert par groupes de charges. Il est également usuel de déplacer les charges 3 entre différents niveaux, c'est-à-dire d'un convoyeur ou transporteur amont 1 vers un convoyeur ou transporteur aval 2 situé à un niveau supérieur (figure 3). Dans de tels cas, il est nécessaire, soit de réaliser un ralentissement des charges 3 avant leur arrivée sur le convoyeur ou transporteur aval 2, soit de favoriser la progression des charges pendant leur déplacement de changement de niveau.

A cet effet, l'invention a pour objet un dispositif d'entraînement pour convoyeurs ou transporteurs de charges, qui est sous forme d'un moyen d'entraînement et de guidage, intégré dans une ligne de convoyeurs ou transporteurs 1 et 2 et s'étendant dans l'axe longitudinal desdits convoyeurs ou transporteurs 1 et 2, perpendiculairement à leur plan et essentiellement constitué par la combinaison d'un tapis d'entraînement 5, disposé le long d'au moins un bord longitudinal ou dans le prolongement des bords longitudinaux d'au moins un convoyeur ou transporteur 1 ou 2 ou de deux convoyeurs ou transporteurs 1 et 2 successifs, et d'un guide d'application 6 des charges 3 contre le tapis d'entraînement 5, disposé le long du ou des bords longitudinaux opposés.

Selon une caractéristique de l'invention, le tapis d'entraînement 5 et le guide d'application 6 des charges 3 sont disposés, par rapport aux chaînes à palettes formant les convoyeurs ou transporteurs 1 et 2, de telle manière que la distance entre leur face opposée est légèrement inférieure à la largeur des charges 3 transportées par lesdits convoyeurs ou transporteurs 1 et 2.

De préférence, le tapis d'entraînement 5 est un tapis à revêtement en caoutchouc ou autre matériau à fort coefficient de frottement et le guide d'application 6 des charges 3 est sous forme d'une lame rigide à extrémités légèrement incurvées en direction opposée au tapis d'entraînement 5 et à faible coefficient de frottement, ladite lame rigide étant montée sur des supports 7 de fixation sur le côté correspondant du ou des convoyeurs ou transporteurs 1 et/ou 2, avec interposition de moyens à déformation élastique contrôlée, tels que des ressorts réglables par vis. Il en résulte la possibilité de prérégler la force d'application de la lame rigide formant le guide d'application 6 des charges 3, de manière à assurer en toutes circonstances un bon maintien desdites charges 3 entre ledit guide d'application 6 et le tapis d'entraînement 5, en prenant notamment en compte les variations possibles de largeur des charges 3.

Par ailleurs, le tapis d'entraînement 5 est entraîné indépendamment des convoyeurs ou transporteurs 1 et/ou 2 et est relié à un moyen indépendant de commande, tel qu'un automate programmable ou autre, asservissant la vitesse dudit tapis d'entraînement 5 à celle nécessaire en aval du dispositif d'entraînement et de guidage 4.

Conformément à une autre caractéristique de l'invention, les supports 7 de fixation du guide d'application 6 des charges 3 sont avantageusement montés sur le châssis du ou des convoyeurs ou transporteurs 1 et/ou 2 avec possibilité de déplacement transversalement à l'axe longitudinal dudit ou desdits convoyeurs ou transporteurs 1 et/ou 2 au moyen de vérins 8 asservis. L'asservissement des vérins 8 est avantageusement réalisé par l'intermédiaire d'un automate programmable ou autre de commande d'une ligne de convoyage ou de transport, dont le programme de commande et de contrôle est paramétré en fonction des charges 3 et des opérations à effectuer.

Ainsi, il est possible de procéder à un réglage de l'écartement entre le tapis d'entraînement 5 et le guide d'application 6 des charges 3, en fonction de la largeur de ces dernières.

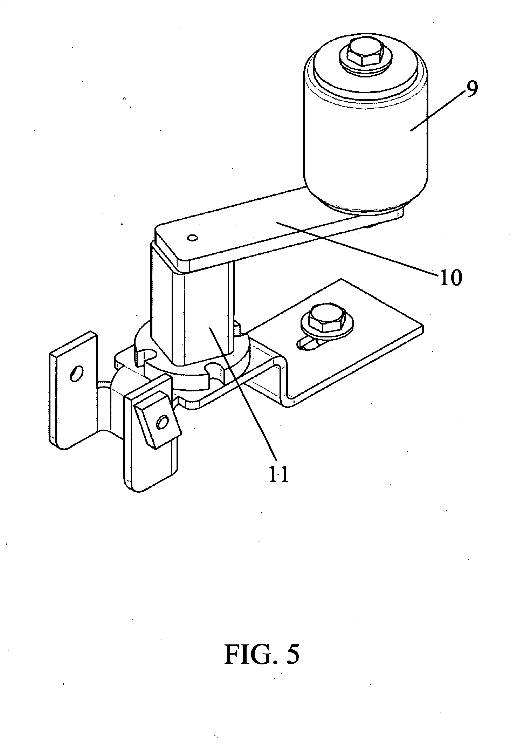

En outre, selon une autre caractéristique de l'invention, le dispositif peut être complété par un moyen complémentaire d'application des charges 3 contre le tapis d'entraînement 5 consistant en un galet 9 monté sensiblement dans le prolongement du guide d'application 6 des charges 3 près de l'extrémité de sortie du dispositif (figures 2 et 3). Ce galet 9 est monté sur le côté correspondant du châssis du convoyeur ou transporteur 1 et/ou 2 correspondant, par l'intermédiaire d'un levier de support 10, articulé sur le châssis au moyen d'un palier pivotant à ressort 11 (figure 5) et dépasse légèrement, en position de repos, l'alignement du plan vertical passant par le guide d'application 6 des charges 3. Le palier pivotant à ressorts est de type connu en soi et est monté sur le châssis par l'intermédiaire d'un axe fixe sur lequel est emmanché un manchon rappelé dans une position pré-établie par l'intermédiaire d'un ressort de rappel disposé entre ledit manchon et l'axe fixe.

En outre, ce galet 9 est avantageusement pourvu d'un revêtement en caoutchouc naturel ou synthétique.

Ainsi, il est possible de réaliser une application efficace des charges 3 contre le tapis d'entraînement 5 pendant tout leur transfert dans le dispositif d'entraînement, de sorte que lesdites charges peuvent être parfaitement contrôlée en ce qui concerne leur cadence de sortie dudit dispositif. En effet, grâce à ce galet 9, les légers rétrécissement de largeur des charges 3 près de leurs extrémités, en particulier dans le cas de caisses, sont compensés par le galet 9 qui reste appliqué contre leur bord longitudinal. De plus, le revêtement du galet 9 en un matériau élastiquement déformable permet de réaliser une compensation supplémentaire de la largeur des charges 3.

Selon un premier mode de réalisation de l'invention, représenté aux figures 1 et 2 des dessins annexés, le dispositif d'entraînement et de guidage 4 peut être monté entre un convoyeur ou transporteur amont 1 et un convoyeur ou transporteur aval 2, ce dernier faisant office de poste de chargement ou analogue et le dispositif d'entraînement et de guidage 4 formant un dispositif de régulation des charges 3 arrivant à une vitesse relativement élevée sur le convoyeur ou transporteur amont 1 et le convoyeur ou transporteur aval 2 fonctionnant à très faible vitesse. A cet effet, les extrémités 5', 5" et 6', 6" du tapis d'entraînement 5 et du guide d'application 6 s'étendent au-dessus des extrémités correspondantes des convoyeurs ou transporteurs amont 1 et aval 2 pour assurer une continuité de maintien et de guidage des charges 3 pendant leur transfert.

Ainsi, il est possible de réguler un flux de charges 3 arrivant sur le convoyeur ou transporteur amont 1 et de ralentir celles-ci au moyen du dispositif d'entraînement et de guidage 4 avant leur passage sur le convoyeur ou transporteur aval 2 et, éventuellement, d'accumuler cesdites charges 3, par un effet de barrage ralentisseur, par l'intermédiaire du dispositif d'entraînement et de guidage 4, sur le convoyeur ou transporteur amont 1 et, éventuellement, de gérer un espacement entre les charges, c'est-à-dire que les charges arrivent du convoyeur ou transporteur amont 1 avec espacement entre elles, et sortent du dispositif d'entraînement et de guidage 4 avec un espacement déterminé. En d'autres termes, le dispositif d'entraînement et de guidage 4 permet de regrouper ou de séparer les charges entre elles.

La figure 3 des dessins annexés représente un autre mode de réalisation de l'invention, dans lequel le dispositif d'entraînement et de guidage 4 forme un moyen de transfert de charges 3 à forte pente entre des convoyeurs ou transporteurs amont 1 et aval 2 s'étendant à deux niveaux différents et à un écartement longitudinal faible, les charges 3 étant saisies à l'extrémité du convoyeur ou transporteur amont 1 et déplacées à l'oblique jusque sur l'extrémité du convoyeur ou transporteur aval 2, par serrage entre le tapis d'entraînement 5 et le guide d'application 6 du dispositif d'entraînement et de guidage 4.

Cette disposition du dispositif d'entraînement et de guidage 4 permet d'assurer un transfert de charges 3 entre des convoyeurs ou transporteurs présentant une différence de niveau importante, tout en étant séparés longitudinalement d'une courte distance. Il en résulte que l'implantation de convoyeurs ou transporteurs peut être effectuée sur une surface au sol nettement plus réduite qu'avec les solutions proposées jusqu'à ce jour, ce qui permet de réduire en conséquence la surface des locaux et donc leur prix de revient.

La figure 4 des dessins annexés représente une autre variante de réalisation de l'invention, dans laquelle le dispositif d'entraînement et de guidage 4 est sous forme d'un ensemble d'entraînement et de guidage à boucles multiples, dont les extrémités du tapis d'entraînement 5 et du guide d'application 6 s'étendent au-dessus des extrémités correspondantes des convoyeurs ou transporteurs amont 1 et aval 2, ces convoyeurs ou transporteurs amont 1 et aval 2 étant disposés à une importante différence de niveau et pouvant, au moins partiellement, être superposés par leurs extrémités, d'une part, prolongée par le dispositif d'entraînement et de guidage 4 et, d'autre part, en prolongement dudit dispositif d'entraînement et de guidage 4.

Ainsi, il est possible de saisir des charges 3 sur un convoyeur ou transporteur amont 1 et de les amener sur un convoyeur ou transporteur aval 2 chevauchant partiellement le premier, à un niveau plus élevé et donc sur une surface au sol très faible. En outre, dans le cas où le dispositif d'entraînement et de guidage 4 réalise un transfert de caisses de réception de bouteilles ou autres produits, devant subir un vidage et/ou un nettoyage total, une réalisation dudit dispositif d'entraînement et de guidage 4 en forme de S permet d'effectuer un renversement total des caisses en cours de déplacement et leur vidage sur un transporteur d'évacuation de déchets disposé sous le trajet desdites caisses retournées.

Grâce à l'invention, il est possible de réaliser un dispositif d'entraînement de charges entre des moyens de transport alimentant différents postes de travail, ce en mettant en oeuvre des moyens de constitution particulièrement simple, d'un faible prix de revient et d'une grande fiabilité, permettant d'effectuer des interventions de régulation et/ou de changement de niveau dans des espaces relativement restreints.

En effet, par rapport aux dispositifs existants à ce jour, l'invention offre une solution extrêmement simple aux problèmes d'accumulation et de transfert entre des niveaux différents et trouve une application particulièrement intéressante dans le domaine du transfert de conteneurs, notamment de bouteilles.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Dispositif d'entraînement pour convoyeurs ou transporteurs de charges, sous forme d'un moyen d'entraînement et de guidage (4), intégré dans une ligne de convoyeurs ou transporteurs (1 et 2) et s'étendant suivant l'axe longitudinal desdits convoyeurs ou transporteurs (1 et 2), perpendiculairement à leur plan et essentiellement constitué par la combinaison d'un tapis d'entraînement (5), disposé le long d'au moins un bord longitudinal ou dans le prolongement des bords longitudinaux d'au moins un convoyeur ou transporteur (1 ou 2) ou de deux convoyeurs ou transporteurs (1 et 2) successifs, et d'un guide d'application (6) des charges (3) contre le tapis d'entraînement (5), disposé le long du ou des bords longitudinaux opposés, le tapis d'entraînement (5) et le guide d'application (6) des charges (3) étant disposés, par rapport aux chaînes à palettes formant les convoyeurs ou transporteurs (1 et 2), de telle manière que la distance entre leur face opposée est légèrement inférieure à la largeur des charges (3) transportées par lesdits convoyeurs ou transporteurs (1 et 2), **caractérisé en ce que** le tapis d'entraînement (5) est un tapis à revêtement en caoutchouc ou autre matériau à fort coefficient de frottement et le guide d'application (6) des charges (3) est sous forme d'une lame rigide à extrémités légèrement incurvées en direction opposée au tapis d'entraînement (5) et à faible coefficient de frottement, ladite lame rigide étant montée sur des supports (7) de fixation sur le côté correspondant du ou des convoyeurs ou transporteurs (1 et/ou 2), avec interposition de moyens à déformation élastique contrôlée, tels que des ressorts réglables par vis.

2. Dispositif, suivant la revendication 1, **caractérisé en ce que** le tapis d'entraînement (5) est entraîné indépendamment des convoyeurs ou transporteurs (1 et/ou 2) et est relié à un moyen indépendant de commande, tel qu'un automate programmable ou autre, asservissant la vitesse dudit tapis d'entraînement (5) à celle nécessaire en aval du dispositif d'entraînement et de guidage (4).

3. Dispositif, suivant la revendication 1, **caractérisé en ce que** les supports (7) de fixation du guide d'application (6) des charges (3) sont montés sur le châssis du ou des convoyeurs ou transporteurs (1 et/ou 2) avec possibilité de déplacement transversalement à l'axe longitudinal dudit
ou desdits convoyeurs ou transporteurs (1 et/ou 2) au moyen de vérins (8) asservis.

4. Dispositif, suivant la revendication 3, **caractérisé en ce que** l'asservissement des vérins (8) est réalisé par l'intermédiaire d'un automate programmable ou autre de commande d'une ligne de convoyage ou de transport, dont le programme de commande et de contrôle est paramétré en fonction des charges (3) et des opérations à effectuer.

5. Dispositif, suivant la revendication 1, **caractérisé en ce qu'**il est complété par un moyen complémentaire d'application des charges (3) contre le tapis d'entraînement (5) consistant en un galet (9) monté sensiblement dans le prolongement du guide d'application (6) des charges (3) près de l'extrémité de sortie du dispositif.

6. Dispositif, suivant la revendication 5, **caractérisé en ce que** le galet (9) est monté sur le côté correspondant du châssis du convoyeur ou transporteur (1 et/ou 2) correspondant, par l'intermédiaire d'un levier de support (10), articulé sur le châssis au moyen d'un palier pivotant à ressort (11) et dépasse légèrement, en position de repos, l'alignement du plan vertical passant par le guide d'application (6) des charges (3).

7. Dispositif, suivant l'une quelconque des revendications 5 et 6, **caractérisé en ce que** le galet (9) est pourvu d'un revêtement en caoutchouc naturel ou synthétique.

8. Dispositif, suivant l'une quelconque des revendications 1 à 7,
**caractérisé en ce qu'**il est monté entre un convoyeur ou transporteur amont (1) et un convoyeur ou transporteur aval (2), ce dernier faisant office de poste de chargement ou analogue, et **en ce qu'**il forme un dispositif de régulation des charges (3) arrivant à une vitesse relativement élevée sur le convoyeur ou transporteur amont (1), le convoyeur ou transporteur aval (2) fonctionnant à très faible vitesse.

9. Dispositif, suivant l'une quelconque des revendications 1 à 8, **caractérisé en ce qu'**il forme un moyen de transfert de charges (3) à forte pente entre des convoyeurs ou transporteurs amont (1) et aval (2) s'étendant à deux niveaux différents et à un écartement longitudinal faible, les charges (3) étant saisies à l'extrémité du convoyeur ou transporteur amont (1) et déplacées à l'oblique jusque sur l'extrémité du convoyeur ou transporteur aval (2), par serrage entre le tapis d'entraînement (5) et le guide d'application (6) du dispositif d'entraînement et de guidage (4).

10. Dispositif, suivant l'une quelconque des revendications 1 à 8, **caractérisé en ce qu'**il est sous forme d'un ensemble d'entraînement et de guidage à boucles multiples, dont les extrémités du tapis d'entraînement (5) et du guide d'application (6) s'étendent au-dessus des extrémités correspondantes des convoyeurs ou transporteurs amont (1) et aval (2), ces convoyeurs ou transporteurs amont (1) et aval (2) étant disposés à une importante différence de niveau et pouvant, au moins partiellement, être superposé par leurs extrémités, d'une part prolongée par le dispositif d'entraînement et de guidage (4) et, d'autre part, en prolongement dudit dispositif d'entraînement et de guidage (4).

## Claims

1. Device for driving load conveyors or transporters in the form of a driving and guiding means (4), integrated into a line of conveyors or transporters (1 and 2) and extending along the longitudinal axis of said conveyors or transporters (1 and 2), perpendicularly to their plane, and formed essentially by the combination of a drive belt (5), arranged along at least one longitudinal edge or in the extension of longitudinal edges of at least one conveyor or transporter (1 or 2) or two successive conveyors or transporters (1 and 2), and a guide for applying (6) the loads (3) against the drive belt (5), arranged along the opposite longitudinal edge or edges, the drive belt (5) and the guide for applying (6) loads (3) being arranged, in relation to chains of pallets forming the conveyors or transporters (1 and 2), such that the distance between their opposite faces is slightly less than the width of the loads (3) transported by said conveyors or transporters (1 and 2), **characterised in that** the drive belt (5) is a belt coated with rubber or another material with a high coefficient of friction and the guide for applying (6) loads (3) is in the form of a rigid plate with ends that are slightly curved inwards in opposite direction to the drive belt (5) and with a low coefficient of friction, said rigid plate being mounted on supports (7) for securing onto the corresponding side of the conveyor(s) or transporter(s) (1 and/or 2), with the interposition of means providing controlled elastic deformation, such as springs that are adjustable by screw.

2. Device according to claim 1, **characterised in that** the drive belt (5) is driven independently of the conveyors or transporters (1 and/or 2) and is connected to an independent control means, such as a programmable controller or the like, which controls the speed of said drive belt (5) to the speed required downstream of the driving and guiding device (4).

3. Device according to claim 1, **characterised in that** the supports (7) for securing the guide for applying (6) loads (3) are mounted on the frame of the conveyor(s) or transporter(s) (1 and/or 2) with the possibility of displacement transversely to the longitudinal axis of said conveyor(s) or transporter(s) (1 and/or 2) by means of servo-controlled actuators (8).

4. Device according to claim 3, **characterised in that** the actuators (8) are controlled by means of a programmable automation device or the like for controlling a conveying or transport line, the command and control program of which is parameterised as a function of the loads (3) and of the operations to be carried out.

5. Device according to claim 1, **characterised in that** it is completed by a additional means for applying loads (3) against the drive belt (5), which means consist of a roller (9) mounted substantially in the extension of the guide for applying (6) the loads (3) close to the output end of the device.

6. Device according to claim 5, **characterised in that** the roller (9) is mounted on the corresponding side of the frame of the corresponding conveyor or transporter (1 and/or 2) by means of a support lever (10), which is articulated onto the frame by means of a spring-mounted pivoting bearing (11) and slightly overshoots, in a position of rest, the alignment of the vertical plane passing through the guide for applying (6) the loads (3).

7. Device according to either one of claims 5 and 6, **characterised in that** the roller (9) is provided with a coating of natural or synthetic rubber.

8. Device according to any one of claims 1 to 7, **characterised in that** it is mounted between an upstream conveyor or transporter (1) and a downstream conveyor or transporter (2), the latter performing the function of a loading station or the like, and **in that** it forms a device for controlling the loads (3) arriving onto the upstream conveyor or transporter (1) at a relatively high speed, the downstream conveyor or transporter (2) operating at a very low speed.

9. Device according to any one of claims 1 to 8, **characterised in that** it forms a means of transferring loads (3) with a high gradient between the upstream (1) and downstream (2) conveyors or transporters extending at two different levels and with a small longitudinal separation, the loads (3) being gripped at the end of the upstream conveyor or transporter (1) and moved obliquely up to the end of the downstream conveyor or transporter (2), by clamping between the drive belt (5) and the application guide (6) of the driving and guiding device (4).

10. Device according to any one of claims 1 to 8, **characterised in that** it is in the form of a driving and guiding assembly with multiple loops, in which the ends of which of the drive belt (5) and the application guide (6) extend above the corresponding ends of the upstream (1) and downstream (2) conveyors or transporters, said upstream (1) and downstream (2) conveyors or transporters being arranged with a large difference in level and are able to overlap, at least partially, at the ends, being, on the one hand, extended by the driving and guiding device (4) and, on the other hand, in extension of the said driving and guiding device (4).

## Patentansprüche

1. Vorrichtung zum Antrieb von Lastförder- oder Lasttransporteinrichtungen in Form eines Antrieb- und Führungsmittels (4), das in einer Anlage einer Förder- oder Transporteinrichtung (1 und 2) integriert ist und sich entlang der Längsachse der Förder- oder Transporteinrichtungen (1 und 2) senkrecht zu dieser erstreckt und die im Wesentlichen durch die Kombination eines Antriebsbandes (5) gebildet wird, das entlang wenigstens einer Längsseite oder in Verlängerung der Längsseiten wenigstens einer Förder- oder Transporteinrichtung (1 oder 2) oder zwei aufeinanderfolgenden Förder- oder Transporteinrichtungen (1 und 2) angeordnet ist, und eines Führungselementes (6) zur Führung der Lasten (3) gegen das Antriebsband (5), das entlang der gegenüberliegenden Längsseite(n) angeordnet ist, wobei das Antriebsband (5) und das Führungselement (6) zur Führung der Lasten (3) im Bezug auf Palettenbänder, die die Förder- oder Transporteinrichtungen (1 und 2) bilden, so angeordnet ist, dass die Entfernung zwischen deren gegenüberliegenden Seite etwas kürzer ist als die Breite der durch die Förder-oder Transporteinrichtungen (1 und 2) transportierten Lasten (3),
**dadurch gekennzeichnet, dass**
es sich bei dem Antriebsband (5) um ein Band mit einer Kautschukbeschichtung oder einem anderen Material mit hohem Reibwert handelt und das Führungselement (6) zur Führung der Lasten (3) in Form einer starren Gleitkufe ausgebildet ist, die an ihren Endbereichen leicht in entgegengesetzter Richtung zum Antriebsband (5) gekrümmt ist und einen niedrigen Reibwert aufweist, wobei die starre Gleitkufe auf Befestigungsträger (7) auf der jeweiligen Seite der Förder- oder Transporteinrichtungen (1 und/oder 2) montiert ist, mit Hilfe von zwischengelagerten Mitteln zur kontrollierten elastischen Verspannung, wie z. B. mit über eine Schraube regulierbaren Federn.

2. Vorrichtung nach Anspruch 1,
**dadurch gekennzeichnet, dass**
das Antriebsband (5) unabhängig von den Förder- oder Transporteinrichtungen (1 und/oder 2) angetrieben wird und mit einem unabhängigen Steuerungsmittel verbunden ist, wie zum Beispiel einem programmierbaren Automaten oder Ähnlichem, zur Steuerung der Geschwindigkeit des Antriebsbandes (5), die für eine abwärtsgerichtete Antriebs- und Führungsvorrichtung (4) nötig ist.

3. Vorrichtung nach Anspruch 1,
**dadurch gekennzeichnet, dass**
die Befestigungsträger (7) des Führungselementes (6) zur Führung der Lasten (3) auf das Chassis der Förder- oder Transporteinrichtung(en) (1 und/oder 2) montiert sind, mit der Möglichkeit zur Verschiebung in Querrichtung entlang der Längsachse der Förder- oder Transporteinrichtung(en) (1 und/oder 2) mit Hilfe von angesteuerten Spindeln/Zylindern (8).

4. Vorrichtung nach Anspruch 3,
**dadurch gekennzeichnet, dass**
die Ansteuerung der Spindeln/Zylinder (8) über einen programmierbaren Automaten oder Ähnliches erfolgt zur Steuerung einer Förder- oder Transportanlage, deren Steuer- und Regelungsprogramm entsprechend der Lasten (3) und der auszuführenden Arbeitsabläufe parametriert ist.

5. Vorrichtung nach Anspruch 1,
**dadurch gekennzeichnet, dass**
diese ein ergänzendes Ausrichtungsmittel der Lasten (3) gegen das Antriebsband (5) umfasst und dieses eine Rolle (9) aufweist, die im Wesentlichen in der Verlängerung des Führungselementes (6) zur Führung der Lasten (3) in der Nähe des Ausgangsendbereiches der Vorrichtung montiert ist.

6. Vorrichtung nach Anspruch 5,
**dadurch gekennzeichnet, dass**
die Rolle (9) auf die jeweilige Seite des Chassis der jeweiligen Förder- oder Transporteinrichtung (1 und/oder 2) mittels eines Trägerhebels (10) montiert ist, der durch ein federvorgespanntes Drehlager (11) mit dem Chassis verbunden ist und im Ruhezustand leicht über die Ausrichtung der vertikalen Ebene herausragt und das Führungselement (6) zur Führung der Lasten (3) kontaktiert.

7. Vorrichtung nach einem der Ansprüche 5 und 6,
**dadurch gekennzeichnet, dass**
die Rolle (9) mit natürlichem oder synthetischem Kautschuk beschichtet ist.

8. Vorrichtung nach einem der Ansprüche 1-7,
**dadurch gekennzeichnet, dass**
diese zwischen eine aufwärtsgerichtete Förder- oder Transporteinrichtung (1) und eine abwärtsgerichtete Förder- oder Transporteinrichtung (2) montiert ist, wobei Letztere zur Beladung oder Ähnlichem dient und die Vorrichtung eine Vorrichtung zur Regelung der Lasten (3) bildet, die mit einer relativ hohen Geschwindigkeit auf der aufwärtsgerichteten Förder- oder Transporteinrichtung (1) ankommen, wobei die abwärtsgerichtete Förder-oder Transporteinrichtung (2) mit einer sehr langsamen Geschwindigkeit arbeitet.

9. Vorrichtung nach einem der Ansprüche 1-8,
**dadurch gekennzeichnet, dass**
diese ein Transfermittel zum Transport von Lasten (3) für starke Neigungen zwischen aufwärtsgerichteten Förder- und Transporteinrichtungen (1) und abwärtsgerichteten Förder- und Transporteinrichtungen (2) bildet, das sich über zwei verschiedene Ebenen mit einem geringen Zwischenraum in Längsrichtung erstreckt, wobei die Lasten (3) an dem Endbereich der aufwärtsgerichteten Förder- oder Transporteinrichtung (1) aufgenommen und schrägliegend bis zum Endbereich der abwärtsgerichteten Förder- oder Transporteinrichtung (2) durch Klemmen zwischen dem Antriebsband (5) und dem Führungselement (6) der Antriebs- und Führungsvorrichtung (4) verfahren werden.

10. Vorrichtung nach einem der Ansprüche 1 - 8,
**dadurch gekennzeichnet, dass**
diese aus einer Gesamtheit an Antrieben und Führungen mit Mehrfach-Rückführschleifen besteht, wobei sich die Endbereiche des Antriebsbandes (5) und des Führungselementes (6) über die jeweiligen Endbereiche der aufwärtsgerichteten Förder- und Transporteinrichtungen (1) und abwärtsgerichteten Förder- und Transporteinrichtungen (2) hinaus erstrecken, wobei die aufwärtsgerichteten Förder- und Transporteinrichtungen (1) und abwärtsgerichteten Förder- und Transporteinrichtungen (2) in gänzlich unterschiedlichen Ebenen angeordnet sind und wenigstens teilweise in den Endbereichen übereinander liegen können, einerseits verlängert durch die Antriebs- und Führungsvorrichtung (4) und andererseits in Verlängerung der Antriebs- und Führungsvorrichtung (4).
